**Europäisches Patentamt**

**European Patent Office**

**Office européen des brevets**

(19)

(11) Publication number : **0 506 749 B1**

(12) # EUROPEAN PATENT SPECIFICATION

(45) Date of publication of patent specification :
**18.10.95 Bulletin 95/42**

(51) Int. Cl.⁶ : **F03D 3/00, F03D 7/06**

(21) Application number : **91901250.0**

(22) Date of filing : **19.12.90**

(86) International application number :
**PCT/AU90/00600**

(87) International publication number :
**WO 91/09225 27.06.91 Gazette 91/14**

(54) **WIND TURBINE.**

(30) Priority : **19.12.89 AU 7921/89**

(43) Date of publication of application :
**07.10.92 Bulletin 92/41**

(45) Publication of the grant of the patent :
**18.10.95 Bulletin 95/42**

(84) Designated Contracting States :
**AT BE CH DE DK ES FR GB GR IT LI LU NL SE**

(56) References cited :
**AU-A- 1 871 388
DE-A- 0 860 930
FR-A- 2 345 600
GB-A- 2 017 230
GB-A- 2 029 909
US-A- 4 137 009
DERWENT ABSTRACT Accession No.
85-195453/32, Class Q55, SU,A, 1134772
(GLADKII)15 January 1985 (15.01.85).**

(73) Proprietor : **THE UNIVERSITY OF
MELBOURNE
Grattan Street
Parkville, Victoria 3052 (AU)**

(72) Inventor : **BROWN, Kenneth, Charles
15 Fitzgibbon Street
Parkville, VIC 3052 (AU)**
Inventor : **MEIKLE, Peter, John
19 Thornton Avenue
Surrey Hills, VIC 3127 (AU)**

(74) Representative : **Barlow, Roy James
J.A. KEMP & CO.
14, South Square
Gray's Inn
London WC1R 5LX (GB)**

**EP 0 506 749 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to turbines, and more particularly to wind turbines.

The Savonius turbine, Darrieus turbine and the cup anenometer are examples of typical cross-flow wind turbines. A substantial advantage of these turbines is that their vertical axis of rotation makes them insensitive to wind direction. However, as these turbines have blades of fixed orientation fluid flow through the rotor is not always optimal. The performance of these types of turbines at 'off-design' tip-speed ratios is therefore poor. (Tip-speed ratio is defined as the ratio between the blade velocity relative to the ground and the velocity of the free stream relative to the ground i.e. $\Omega R/V_1$). In particular, the Savonius and cup anemometer type turbines suffer large losses and only perform satisfactorily at low tip-speed ratios typically up to about 1.5. The Darrieus turbine on the other hand operates at higher tip-speed ratios typically 3 to 7, but the range of tip-speed ratios for effective operation is narrow and the turbine is not self-starting.

US-A-4137009 discloses a vertical axis cross-flow turbine having the blades pivotally carried by the turbine rotor.

FR-A-2345600 discloses a vertical axis cross-flow turbine having flexible blades which are mounted substantially horizontally to the central mast of the turbine rotor and which droop towards their tips due to the low flexural stiffness of the blades which are also torsionally soft or flexible. Various arrangements are disclosed for the twisting of the blades near their tips, and mention is made of the possibility of an auto-pilot to control the blade twist for varying the incidence during rotation of the turbine rotor. The auto-pilot responds to wind speed and direction and rotor speed, acceleration and position in its orbit.

A wind turbine according to the present invention is as defined in claim 1.

The blade may be mounted for pivotal movement about a vertical axis and the determining means may measure the angle $\phi$ and the blade angle $\Psi$ and the control means may set the angle of attack $\alpha$ of the blade as a function of the $\phi$ and $\Psi$.

The turbine may further comprise a flap pivotally mounted on the trailing edge of the blade and the blade may be mounted for pivotal movement about a vertical axis and the determining means may measure the angle $\phi$ of the apparent fluid velocity V, and the control means may comprise first control means for setting the blade pitch angle $\Psi$ substantially to the angle $\phi$ of the apparent fluid velocity V and second control means for controlling the flap angle $\beta$ such that the flap angle $\beta$ is set as a function of the angle $\phi$ of the apparent fluid velocity. The second control means may instead control the flap angle $\beta$ such that the flap angle $\beta$ is set as a function of the blade angle $\Psi$.

In either of the above forms comprising a flap pivotally mounted on the trailing edge of the blade, there may be a stabiliser attached to the blade and arranged to ensure that the blade is maintained at substantially zero angle of attack $\alpha$.

The stabiliser may be at least one aerofoil stabiliser attached to the blade and having at least one movable control surface and the control means responsive to the angle $\phi$ may change the angle $\tau$ of the movable control surface as a function of $\phi$, the movement in the control surface resulting in a change in the angle of attack $\alpha$ of the blade.

Each blade assembly may be fixedly mounted on at least one rotor arm extending radially relative to the rotor axis and may further comprise a flap pivotally mounted on the trailing edge of the blade, with the determining means measuring either the angle $\phi$ of the apparent fluid velocity V or the angle of attack $\alpha$, and the control means setting the flap angle $\beta$ as a function of the angle measured by the determining means.

Embodiments of the invention will now be described, by way of example only, with reference to the accompanying drawings in which:-

Figure 1 is a schematic representation of a turbine rotor;

Figure 2 is a schematic representation of a blade illustrating angles $\alpha$, $\phi$ and $\Psi$;

Figures 3a and 3b illustrate the lift forces on a blade;

Figure 4 illustrates a first embodiment of a blade arrangement according to the invention;

Figure 5 illustrates a second embodiment of a blade arrangement according to the invention;

Figure 6 is a graph illustrating the relationship between angles $\phi$ and $\alpha$, $\beta$ or $\tau$;

Figures 7a and 7b show flap arrangements suitable for use with the second, third or fourth embodiment of the invention;

Figure 7c illustrates a four bar linkage used to connect the flap to the blade;

Figure 8 illustrates a third embodiment of a blade arrangement according to the invention;

Figure 9 illustrates the lift forces on the blade arrangement shown in Figure 8;

Figure 10 illustrates a fourth embodiment of a blade arrangement according to the invention;

Figure 11 illustrates a statically stable blade;

Figure 12 illustrates a fifth embodiment of a blade arrangement according to the invention;

Figure 13 illustrates the relationship between $\beta$ and $\phi$ or $\alpha$ for the blade arrangement shown in Figure 12; and

Figure 14 illustrates approximately how $\alpha$ varies with the tip-speed ratio and angle $\Theta$;

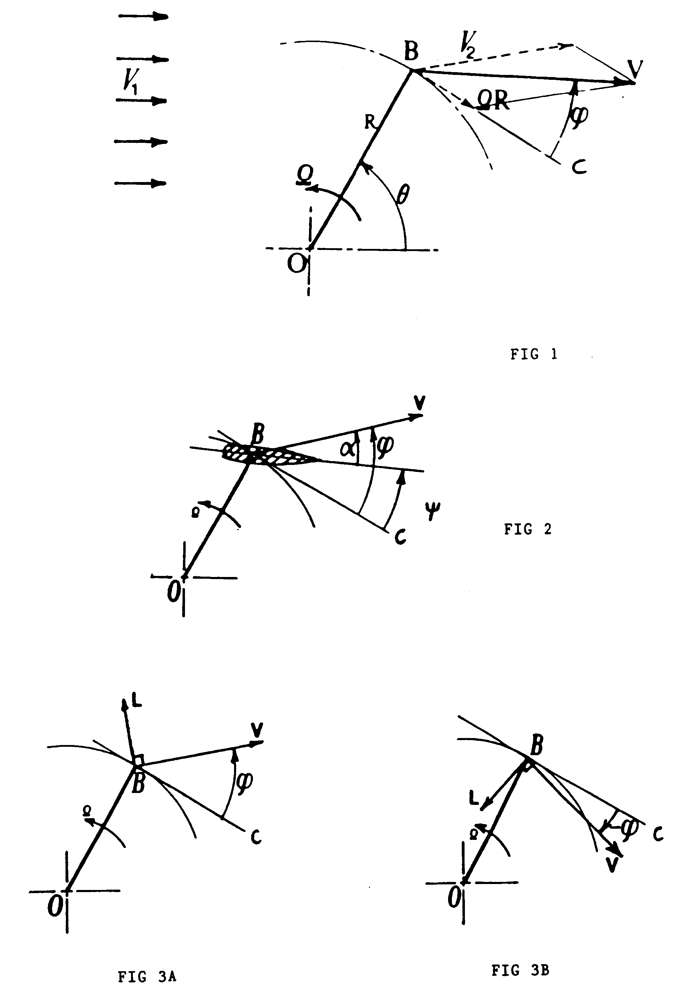

Figure 1 represents schematically an axial view of a turbine rotor rotating with angular velocity $\Omega$. The rotor shaft at O carries a radial arm which supports a blade in bearings at B. The blade is thereby constrained to move in a circular orbit about the rotor shaft. Line OB represents a radial arm of length R whose position relative to the free-stream wind is defined by angle $\Theta$. The free stream velocity is shown as $V_1$.

The vector diagram originating at B illustrates that the apparent velocity V of the fluid relative to the blade is the vector sum of the velocity $V_2$ of the fluid relative to the ground, and the velocity $V_G$ of the ground relative to the blade ($V_G = \Omega R$).

The apparent fluid velocity V relative to the blade makes an angle $\phi$ to the tangent to the orbit at B, and an angle $\alpha$ to the blade chord. The chord of the blade makes an angle $\Psi$ to the tangent at B. The relationship between $\phi$ and $\Psi$ is:

$$\alpha = \phi - \Psi$$

This relationship between the angle of attack $\alpha$, the angle $\phi$ of the apparent fluid velocity V and the angle of the blade $\Psi$ is best shown in Figure 2. [Note: All angles are considered positive when measured anticlockwise, as seen in Figure 2].

The aerodynamic forces on any blade or aerofoil are commonly resolved into two components. These components are the lift component L and the drag component D. By definition the drag component is in the direction of the apparent wind V and the lift component is perpendicular to the drag component. Over the working range of a simple symmetric aerofoil the lift component L is proportional to the angle of attack $\alpha$. Thus the lift component L is zero at zero angle of attack $\alpha$ and changes sign when the angle of attack $\alpha$ changes sign. The lift component L dominates over the effects of the drag component D in most circumstances. The exceptions to this rule occurring, when $\alpha$ is very small, and when $\alpha$ is so large as to be outside the normal working range causing the aerofoil to stall.

Figures 3a and 3b show the lift component L on a blade. With the lift component L as shown in Figure 3a, the moment about the rotor axis O will be in the same direction as $\Omega$, thereby serving to drive the rotor in the direction of rotation. Furthermore, for any angle $0 < \phi < 180°$ the lift component L will produce a moment in the direction of $\Omega$ and will thereby drive the rotor. Similarly, Figure 3b shows that for any angles in the range $-180 < \phi < 0$ the lift component L must have the opposite sign in order to drive the rotor. Thus, in order to achieve the objective of having the lift component from the blade drive the turbine, the sign of the lift component L must be controlled. This can be done by altering the angle of attack $\alpha$ of the blade, and/or by the use of the blade flaps.

In summary, in order for the lift component L on each blade to contribute positively to the driving torque on the rotor, for the range $-180° < \phi < 180°$, the angle of attack $\alpha$ (or flap angle $\beta$) must change sign when the angle $\phi$ changes sign.

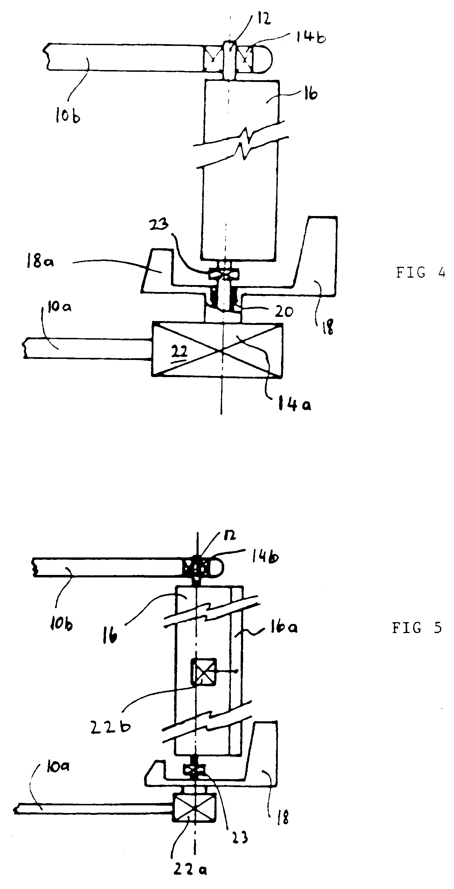

Figure 4 illustrates a blade arrangement for a turbine that operates to control the blade angle of attack $\alpha$ and make it dependent upon the direction $\phi$ of the apparent fluid velocity V. A rotor shaft (not shown) carries radial arms 10a, 10b which support a vertical shaft 12 in bearings 14a, 14b. Blade 16 is rigidly mounted on shaft 12 which is free to pivot about a vertical axis through bearings 14a, 14b. A weathercock 18 supported in bearing 20 is mounted co-axially with the vertical shaft 12. Weathercock 18 is free to pivot about vertical shaft 12 to thereby align itself in the direction $\phi$ of the apparent fluid velocity V. The angle $\phi$ can then be determined by measuring the angle between the weathercock 18 and the arm 10a. The forward aerofoil 18a of the weathercock 18 aerodynamically damps the motion of the weathercock 18. A control system 22 is mounted on radial arm 10a to drive the blade 16 to thereby adjust the angle of attack $\alpha$ of the blade 16. A universal joint 23 on shaft 12 allows the shaft 12 to flex during rotation.

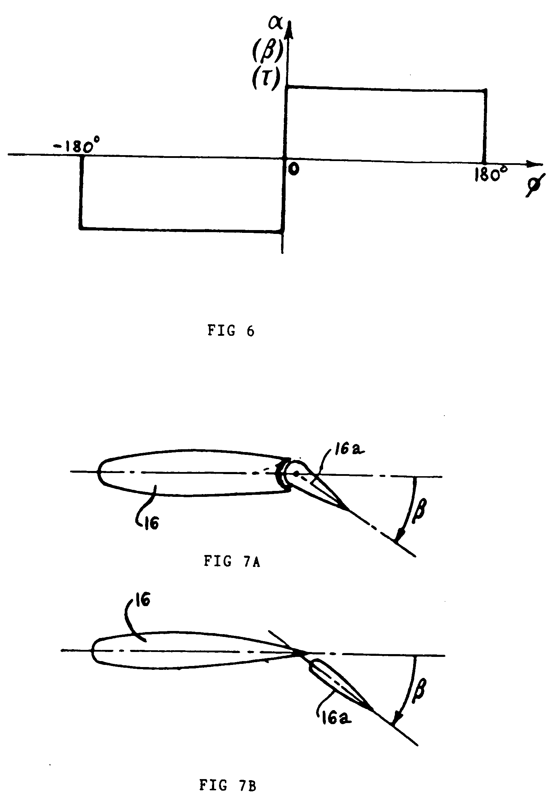

During operation, weathercock 18 is used to continuously measure the direction $\phi$ of the apparent fluid velocity V. The blade angle $\Psi$ may be measured by a shaft encoder mounted within the control system 22. Blade angle $\Psi$ and the direction $\phi$ of the apparent fluid velocity V are fed as inputs to the control system 22. The control system 22 uses the simple relationship $\alpha = \phi - \Psi$ to calculate the current blade angle of attack $\alpha$. The control system 22 adjusts the blade angle $\Psi$ to maintain the desired magnitude and sign of the angle of attack $\alpha$ so that the lift component L contributes positively to the driving torque. Figure 6 illustrates an adequate relationship between the angle of attack $\alpha$ and the direction $\phi$ of the apparent fluid velocity.

In order to minimize the load on the servo motor, both the centre of gravity and the centre of lift of the blade 16 should be close to the axis of the vertical shaft 12.

Weathercock 18 must be carefully balanced with its centre of gravity on its pivot axis otherwise centrifugal forces will prevent its proper operation. The weathercock 18 must also be light and relatively short so that it will react quickly to changes in wind direction. The weathercock 18 as shown in Figure 4 is of a stylized form only. Alternatively, the weathercock 18 could have a biplane tail which would help keep the tail clear of any aerodynamic disturbances resulting from the blade.

Although weathercock 18 has been used to measure the direction $\phi$ of the apparent fluid velocity V this measurement could be obtained by other means. One method seen to be particularly advantageous, involves measuring the pressure at at least three points on the blade surface. This would allow the calculation of both the magnitude and direction of the fluid velocity relative to the blade. In practice, preferably four pressure measurements would be taken on a symmetrical blade. This extra pressure measurement would provide information that would be useful to determine the direction in which to turn a stalled blade. This method of determining angle $\phi$ is probably only suited to very large turbines but is preferable as it eliminates the need to rely on delicate, light weight weathercocks whose performance may be unreliable. Another method by which the direction $\phi$ of the apparent fluid velocity V could be obtained is by use of a yaw meter mounted on one of the arms.

The blade arrangement shown in Figure 5 is similar to that of Figure 4 with the exception that the aerofoil or blade 16 has a pivotal aerofoil flap 16a attached to its trailing edge. This type of aerofoil blade 16 with attached flap 16a commonly has its best lift/drag ratio when the aerofoil blade 16 is at approximately zero angle of attack $\alpha$. The turbine illustrated in Figure 5 takes advantage of this feature in order to separate the control system into two independent parts. The first part of the control system 22a drives the blade 16 to follow the direction $\phi$ of the apparent fluid velocity V with nominally zero angle of attack (ie. $\Psi = \phi$). The second part of the control system 22b, which may be mounted within the blade 16, sets the flap 16a to flap angle $\beta$. The angle $\beta$ is defined relative to the chord line of the blade 16. The magnitude of the flap angle $\beta$ is determined on the basis of the required power output and the sign of angle $\beta$ is identical to the sign of angle $\phi$. Figure 6 illustrates the relationship between angle $\phi$ and the flap angle $\beta$. Flap 16a thereby ensures that the lift force L on the blade 16 contributes positively at all times to the driving torque on the rotor.

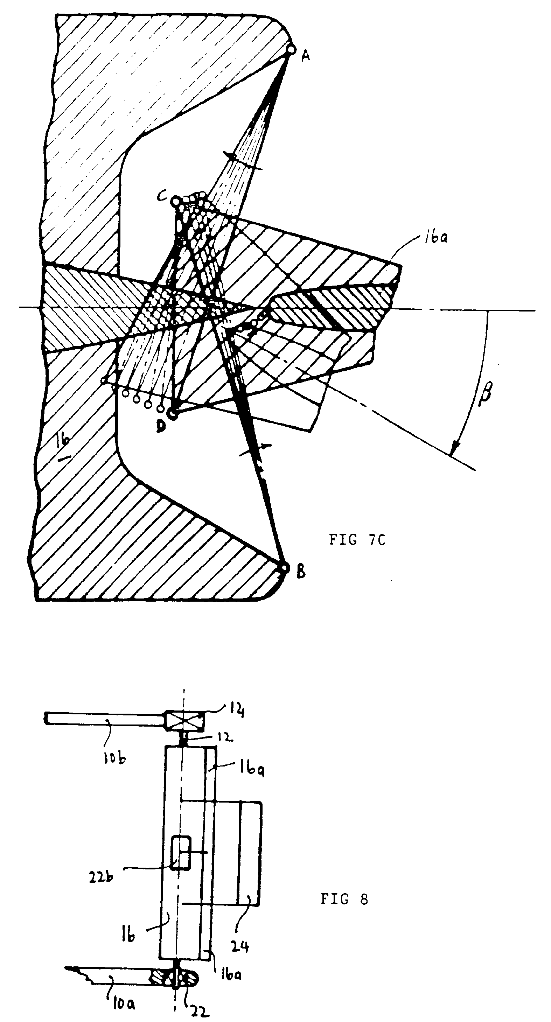

The blade arrangement shown in Figure 5 is structurally more complex than that of Figure 4 because of the need to incorporate a separate flap 16a. Figure 7a shows a conventional blade with flap design, typically used for aircraft ailerons. An alternative would be to use a separate aerofoil flap 16a as shown in Figure 7B. It has been found that the best location for the leading edge of the flap 16a is just under the trailing edge of the blade 16, as shown in Figure 7b. The problem with this type of flap arrangement is that a simple hinge cannot be used to connect the flap 16a to the blade 16 if the flap 16a is required to move both up and down. A simple four bar linkage illustrated in Figure 7c will overcome this problem. As shown in Figure 7c, hinge points A and B are attached to the blade 16 and hinge points C and D are attached to the flap 16a. Links AD and BC are rigid links.

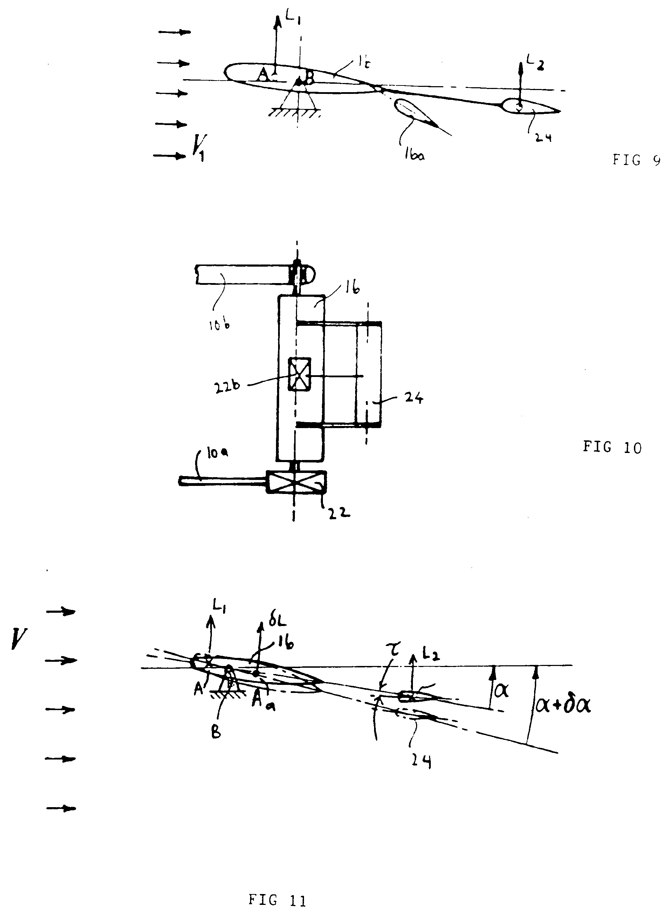

The blade arrangement shown in Figure 8 is similar to the blade arrangement of Figure 5 with the exception that a tail 24 is mounted directly to the blade 16. The flap/blade arrangement can be either of the arrangements shown in Figures 7a, 7b. The blade 16 is set to zero angle of attack $\alpha$ by means of fixed tail 24. Blade 16 thereby follows the direction $\phi$ of the apparent fluid velocity V. As with the weathercock 18, a forward canard aerofoil may be useful to increase the aerodynamic damping. Control system 22 measures the blade angle $\Psi$ and uses the approximation $\phi = \Psi$

to determine the direction $\phi$ of the apparent fluid velocity V. The magnitude of the flap angle $\beta$ is determined on the basis of the required power output and the sign of angle $\beta$ is identical to the sign of the angle $\phi$. The desired relationship between angle $\beta$ and angle $\phi$ is shown in Figure 6. Control system 22b may be mounted within blade 16 and adjusts the flap angle $\beta$ such that the lift force L serves to drive the rotor.

Figure 9 illustrates the lift force L on the blade arrangement shown in Figure 8. Point B is the pivot axis of the blade 16 and point A is the centre of lift of the blade 16 and the flap 16a but without its associated tail 24. With this type of blade arrangement, the centre of lift A would advantageously be in front of the pivot point B and thus the lift component $L_1$, on the blade 16 and the flap 16a combined, and the lift component $L_2$, on the tail 24 are both positive and both serve to drive the rotor.

A refinement to the blade arrangement shown in Figure 8 involves the addition of a servo control system to detect the angular acceleration of the blade 16. The control system would then apply a torque to the blade 16 proportional to the angular acceleration thus compensating for the effects of the inertia of the blade 16. Furthermore such a control system may also be used to compensate the aerodynamic damping of the blade 16. These control systems would dramatically improve the response of the blade 16 to changes in wind direction.

Figure 10 illustrates another blade arrangement for a turbine according to the present invention. The blade arrangement is similar to that of Figure 8 however with this arrangement there is no flap 16a. The blade comprises more than one aerofoil and at least one of the aerofoils must be movable to change the decalage $\tau$. The decalage angle $\tau$ is defined as the angle between the chord lines of the aerofoil control surface 24 and the aerofoil blade 16, see Figure 11. The intention of this design is to allow the aerodynamic forces on the blade 16 and the tail 24 to maintain the blade 16 at an angle of attack $\alpha$ in accordance with Figure 6. As the angle of attack $\alpha$ must change sign according to the direction $\phi$ of the apparent fluid velocity V, the decalage angle $\tau$ of the movable aerofoil tail 24 must be controlled by a mechanism with an input $\phi$ and an external signal identifying the desired magnitude of the angle of attack $\alpha$. Control system 22b may be mounted in the blade 16 to drive the tail 24. Tail 24 may alternatively be in the form of a fixed stabilizer and a moving 'elevator' control surface. A shaft encoder or similar device would measure the blade angle $\Psi$.

In order for the blade arrangement of Figures 8 and 10 to be statically stable, the aerodynamic centre $A_a$ of the combined blade 16 and tail 24 (Figure 11) must be behind the pivot point B of the blade 16. This will ensure that, if the angle of attack $\alpha$ of the blade 16 is increased from its equilibrium position to $\alpha + \delta\alpha$,

the additional lift component δL acting through the aerodynamic centre A will result in a moment about B tending to restore blade 16 to its equilibrium position.

With turbines of the type shown in Figure 10 it is easier to measure the blade angle Ψ than the direction φ of the apparent fluid velocity V. The approximation φ = Ψ may then be used to determine the direction φ of the apparent fluid velocity V. The relationship between the angle τ of the moving stabilizer or control surface and the blade angle Ψ is as shown in Figure 6.

The tail 24 used to control the blade lift must be moved twice per rotor revolution, at φ = 0° and φ = ±180°. That is, each time the decalage angle changes from +τ to -τ, or from -τ to +τ. A simple cam mechanism could be used to move the blade. Alternatively, a simple hydraulic or electric mechanism could be used. These later systems would be preferred as the energy required could be drawn from an external source.

A refinement to the turbine shown in Figure 10 is to include the additional servo-control system as described previously with respect to the arrangement shown in Figure 8.

Australian Patent 522160 to Telford describes a turbine arrangement somewhat similar to that shown in Figure 10. However with Telford's blade arrangement the pivot B is placed ahead of the centre of lift A of the blade 16, whereas in the present invention the centre of lift A is in front of the pivot B. Telford's arrangement results in a positive lift component $L_1$ on the blade and a negative lift component $L_2$ on the stabilizer. The sum of the two lift components produces a resultant lift component L which acts at the blade pivot point B. This is contrary to the blade arrangement of the present invention, where there is a positive lift component on both the tail 24 and the blade 16 resulting in better blade lift/drag ratios.

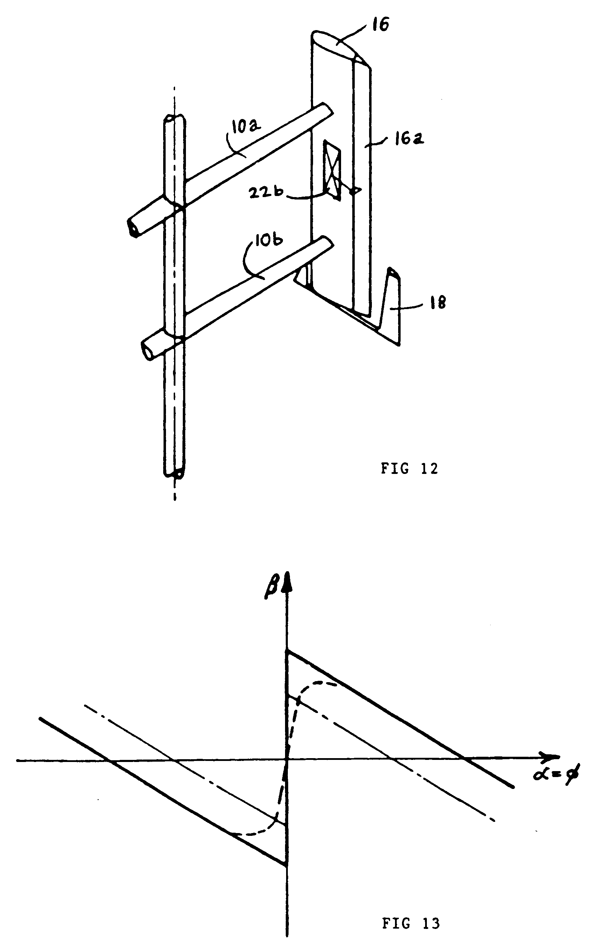

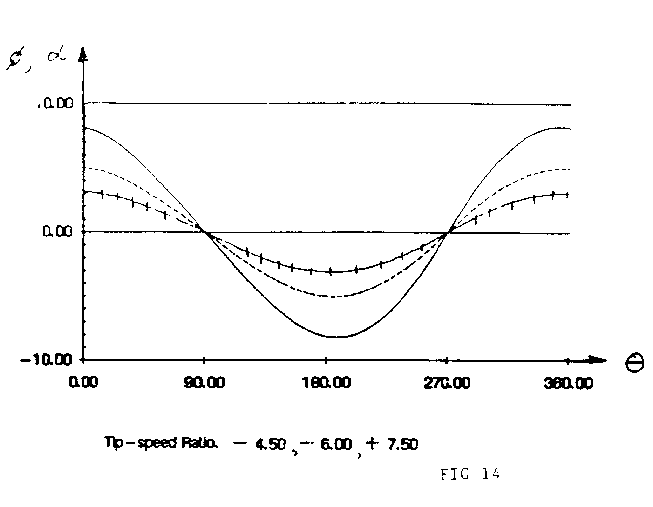

Figure 12 illustrates a blade arrangement for a turbine which is similar to the Darrieus turbine. However, the turbine has both an improved performance and operates over a broader tip-speed ratio range. (Tip-speed ratio is the ratio between the blade velocity relative to the ground and the velocity of the free stream relative to the ground ie. $WR/V_1$). As shown in Figure 10, the blade 16 is fixed to radial arms 10a, 10b such that the chord of the blade 16 is tangential to its orbit about the rotor shaft. The direction φ of the apparent fluid velocity V is determined by the weathercock 18. Figure 14 illustrates approximately how the angle φ of the apparent wind velocity V varies with the tip-speed ratio and angle Θ. Since the blades 16 are fixed with their chord tangential to their orbit, the angle of attack α of the blade is equal to φ, the direction of the apparent fluid velocity V (i.e. α = φ and Ψ = 0).

It should be noted that with a conventional Darrieus rotor at low tip speed-ratios, the angle of attack α will exceed 15° for some part of the rotor orbit, and thus a simple aerofoil blade, as used on a Darrieus rotor would be expected to stall. Furthermore, at higher tip-speed ratios the angle of attack α is small and so the blade lift L will be small and the lift/drag ratio poor. Thus the blade lift L will contribute little to the rotor torque. The conventional Darrieus rotor therefore stops functioning at low tip-speed ratios because the blades stall, and stops functioning at high tip-speed ratios partly because at such small angles of attack the effects of blade drag outweigh the effects of blade lift. Flap 16a on the rotor overcomes these problems. The flap 16a can be used to increase the blade lift L when the angle of attack α is small, and to delay stall when the angle of attack α is large. The flap angle β is set by a servo-system 22b within the blade 16. The approximate relationship between the flap angle β and the angle of attack α is shown in Figure 13. A reasonable criterion for choosing the form of angle β as a function of angle α would be to require that the lift-coefficient for the blade 16 remain constant irrespective of the angle of attack α and this would result in the form shown as a solid line in Figure 13. The chain-dotted line shows the form of the function to be used if less blade lift is required and the dotted line indicates how the function may be modified to avoid the necessity for instantaneous movement of the flap when the angle of attack passes α = o.

The disadvantage with this type of blade arrangement is that in some instances it may not be self-starting and must be driven up to working speed.

Although all the embodiments of the invention describe the blades as being attached to radial arms which are attached to a central rotor, the blades may alternatively be mounted vertically in a conforming track arrangement and thereby be driven around the track.

The embodiments have been described by way of example only and modifications are possible within the scope of the invention.

## Claims

1. A cross-flow wind turbine comprising a rotor mounted for rotation about a vertical axis (12); a plurality of blade assemblies connected to the rotor, each blade assembly comprising a blade (16) of aerofoil section; means (18) for determining the direction of the apparent fluid velocity; and control means (22) for setting the blade characterized in that the means (18) for determining the apparent fluid velocity are mounted on the rotor and determine the angle φ of the apparent fluid velocity V relative to the tangent to the blade orbit; and in that the control means (22) are responsive to the determining means (18) to set the blade (16) such that the lift component of the aerodynamic force on the blade (16) contributes positively to the driving torque on the rotor.

2. A cross-flow wind turbine according to claim 1, wherein the blade (16) is mounted for pivotal movement about a vertical axis (12), wherein the determining means (18) measures the angle $\phi$ of the apparent fluid velocity V, and wherein the control means (22) sets the blade by altering the pitch angle $\Psi$ of the blade to select the angle of attack $\alpha$ of the blade (16) as a function of the angle $\phi$.

3. A cross-flow wind turbine according to claim 2, wherein the control means (22) sets the angle of attack $\alpha$ of the blade (16) as a function of the angle $\phi$ and the desired output power of the turbine.

4. A cross-flow wind turbine according to claim 1, wherein the angle $\phi$ is found indirectly by measuring the pitch angle $\Psi$ of the blade and using the relationship $\phi = \alpha + \Psi$, where $\alpha$ is the angle of attack of the blade (16).

5. A cross-flow wind turbine according to claim 1, wherein the blade (16) is mounted for pivotal movement about a vertical axis (12) and wherein the determining means (18) measures the angle $\phi$ and the pitch angle $\Psi$ of the blade and the control means (22) sets the blade by altering the pitch angle $\Psi$ of the blade to select the angle of attack $\alpha$ of the blade (16) as a function of the angles $\phi$ and $\Psi$.

6. A cross-flow wind turbine according to claim 4, wherein the pitch angle $\Psi$ of the blade is measured by a shaft encoder.

7. A cross-flow wind turbine according to any one of the preceding claims wherein the control means (22) is mounted on at least one of the rotor arms (10a).

8. A cross-flow wind turbine according to claim 1 further comprising a flap (16a) pivotally mounted on the trailing edge of the blade (16) and wherein the blade (16) is mounted for pivotal movement about a vertical axis (12) and the determining means (18) measures the angle $\phi$ of the apparent fluid velocity V and wherein the control means (22) comprises first control means (22a) for setting the pitch angle $\Psi$ of the blade substantially to the angle $\phi$ of the apparent fluid velocity V and second control means (22b) for controlling the flap angle $\beta$ such that the flap angle $\beta$ is set as a function of the angle $\phi$ of the apparent fluid velocity.

9. A cross-flow wind turbine according to claim 1 further comprising a flap (16a) pivotally mounted on the trailing edge of the blade (16) and wherein the blade (16) is mounted for pivotal movement about a vertical axis (12) and the determining means (18) measures the angle $\phi$ of the apparent fluid velocity V and wherein the control means (22) comprises first control means (22a) for setting the pitch angle $\Psi$ of the blade substantially to the angle $\phi$ of the apparent fluid velocity V and second control means (22b) for controlling the flap angle $\beta$ such that the flap angle $\beta$ is set as a function of the pitch angle $\Psi$ of the blade.

10. A cross-flow wind turbine according to claim 9 wherein the control means (22) sets the angle of attack $\alpha$ of the blade (16) as a function of the pitch angle $\Psi$ of the blade and the desired output power of the turbine.

11. A cross-flow wind turbine according to claim 8 wherein the flap (16a) is mounted substantially adjacent to the trailing edge of the blade (16).

12. A cross-flow wind turbine according to claim 1 wherein the blade (16) is mounted for pivotal movement about a vertical axis (12) and further comprising a flap (16a) pivotally mounted on the trailing edge of the blade (16), wherein the determining means (18) measures the angle $\phi$ of the apparent fluid velocity V, a stabiliser (24) attached to the blade (16), said stabiliser (24) being arranged to ensure that the blade (16) is maintained at substantially zero angle of attack $\alpha$ and control means (22) for controlling the flap angle $\beta$ such that the flap angle $\beta$ is set as a function of the angle $\phi$ or the pitch angle $\Psi$ of the blade.

13. A cross-flow wind turbine according to claim 12 wherein the flap angle $\beta$ is set as a function of the angle $\phi$ of the apparent fluid velocity or the pitch angle $\Psi$ of the blade and the desired output power of the turbine.

14. A cross-flow wind turbine according to claim 12 wherein said control means (22) has an input equal to the pitch angle $\Psi$ of the blade and said control means (22) determines the angle $\phi$ of the apparent fluid velocity V according to the approximation $\phi = \Psi$.

15. A cross-flow wind turbine according to any one of claims 12 to 14 wherein the control means (22b) for controlling flap angle $\beta$ is mounted within the blade (16).

16. A cross-flow wind turbine according to any one of claims 12 to 15 wherein the centre of lift of the blade (16) and flap (16a) in combination is positioned in front of the point (B) at which the blade (16) is arranged to pivot.

17. A cross-flow wind turbine according to any one of claims 12 to 16 further comprising means to detect the angular acceleration of the blade (16).

18. A cross-flow wind turbine according to claim 17 wherein the control means (22) is arranged to apply a torque to the blade (16) proportional to the detected angular acceleration to compensate for the effects of the inertia of the blade (16).

19. A cross-flow wind turbine according to claim 1 wherein the blade (16) is mounted for pivotal movement about a vertical axis (12) and wherein the determining means (18) measures the angle $\phi$ of the apparent fluid velocity V and further comprising at least one aerofoil stabiliser (24) attached to the blade (16) having at least one movable control surface and control means (22b) responsive to the angle $\phi$ to change the decalage angle $\tau$ of the movable control surface as a function of $\phi$, the movement in the control surface resulting in a change in the angle of attack $\alpha$ of the blade (16).

20. A cross-flow wind turbine according to claim 19 wherein the control means (22b) sets the decalage angle $\tau$ as a function of $\phi$ and the desired output power of the turbine.

21. A cross-flow wind turbine according to any one of claims 19 and 20 wherein the stabiliser (24) comprises a fixed stabiliser and wherein the control surface comprises a moving elevator control surface.

22. A cross-flow wind turbine according to any one of claims 19 to 21 wherein the aerodynamic centre of the blade (16) and the stabiliser (24) in combination is positioned behind the pivot point (B) of the blade (16).

23. A cross-flow wind turbine according to any one of claims 19 to 22 wherein the stabiliser (24) is driven by cam means, hydraulic means or electric means to change the decelage angle $\tau$ of the control surface.

24. A cross-flow wind turbine according to claim 19 wherein each blade assembly (16) is pivotally mounted on at least one rotor arm (10a, 10b) extending radially relative to the rotor axis.

25. A cross-flow wind turbine according to claim 1 wherein each blade assembly (16) is fixedly mounted on at least one rotor arm (10a, 10b) extending radially relative to the rotor axis and further comprises a flap (16a) pivotally mounted on the trailing edge of the blade (16), wherein the determining means (18) measures either the angle $\phi$ of the apparent fluid velocity V relative to the tangent to the blade orbit or angle of attack $\alpha$, and the control means (22b) sets the flap angle $\beta$ as a function of the angle measured by the determining means (18).

26. A cross-flow wind turbine according to claim 25 wherein the control means (22b) sets the flap angle $\beta$ as a function of the angle measured by the determining means (18) and the desired output power of the turbine.

27. A cross-flow wind turbine according to claim 25 wherein the chord of the blade (16) is tangential to its orbit about the rotor.

28. A cross-flow wind turbine according to any one of claims 1, 8, 19 or 25 wherein the means for determining (18) the angle $\phi$ of the apparent fluid velocity V comprises a pivotal vane (18) mounted for pivotal movement about a vertical axis (12) adjacent the blade (16) or a two or three hole yaw probe.

29. A cross-flow wind turbine according to claim 28 wherein the vane (18) is mounted on a vertical axis (12) positioned ahead of the leading edge of the blade (16).

30. A cross-flow wind turbine according to claim 28 wherein the vane (18) is mounted co-axial with the blade (16).

31. A cross-flow wind turbine according to any one of claims 1, 8, 19 or 25 wherein the means for determining (18) the angle $\phi$ of the apparent fluid velocity comprises a pressure measuring means mounted on the blade (16) and analysing means for determining the angle of attack $\alpha$ of the blade (16) from the pressure measurements obtained by the pressure measuring device.

32. A cross-flow wind turbine according to claim 31 wherein the pressure measuring means measures the pressure at at least three points on the blade surface.

33. A cross-flow wind turbine according to any one of claims 25 to 32 wherein the control means (22b) comprises a servo-system.

34. A cross-flow wind turbine according to claim 33 wherein the actuator of the servo-system is mounted in the blade (16).

35. A cross-flow wind turbine according to any one of claims 25 to 34 wherein the lift-coefficient of the blade (16) is substantially constant irrespective of the angle of attack $\alpha$.

**Patentansprüche**

1. Querströmungswindturbine, umfassend: einen zur Rotation um eine vertikale Achse (12) gelagerten Rotor, eine Mehrzahl mit dem Rotor verbundener Blattanordnungen, wobei jede Blattanordnung ein Blatt (16) mit einem Flügelprofil umfaßt, Mittel (18) zum Bestimmen der Richtung der scheinbaren Fluidgeschwindigkeit und Steuermittel (22) zum Einstellen des Blatts, dadurch gekennzeichnet, daß die Mittel (18) zum Bestimmen der scheinbaren Fluidgeschwindigkeit an dem Rotor angebracht sind und den Winkel $\phi$ der scheinbaren Fluidgeschwindigkeit V relativ zur Tangente der Bahn des Blatts bestimmen und daß die Steuermittel (22) auf die Bestimmungsmittel (18) ansprechen, um das Blatt (16) derart einzustellen, daß die Auftriebskomponente der aerodynamischen Kraft auf das Blatt (16) positiv zum treibenden Drehmoment auf den Rotor beiträgt.

2. Querströmungswindturbine nach Anspruch 1, wobei das Blatt (16) zur Schwenkbewegung um eine vertikale Achse (12) gelagert ist, wobei die Bestimmungsmittel (18) den Winkel $\phi$ der scheinbaren Fluidgeschwindigkeit V messen und wobei die Steuermittel (22) das Blatt durch Ändern des Steigungswinkels $\Psi$ des Blatts einstellen, um den Angriffswinkel $\alpha$ des Blatts (16) als eine Funktion des Winkels $\phi$ auszuwählen.

3. Querströmungswindturbine nach Anspruch 2, wobei die Steuermittel (22) den Angriffswinkel $\alpha$ des Blatts (16) als eine Funktion des Winkels $\phi$ und der gewünschten Ausgangsleistung der Turbine einstellen.

4. Querströmungswindturbine nach Anspruch 1, wobei der Winkel $\phi$ indirekt durch Messen des Steigungswinkels $\Psi$ des Blatts und Verwendung der Beziehung $\phi = \alpha + \Psi$ gefunden wird, wobei $\alpha$ der Angriffswinkel auf das Blatt (16) ist.

5. Querströmungswindturbine nach Anspruch 1, wobei das Blatt (16) zur Schwenkbewegung um eine vertikale Achse (12) gelagert ist und wobei die Bestimmungsmittel (18) den Winkel $\phi$ und den Steigungswinkel $\Psi$ des Blatts messen und die Steuermittel (22) das Blatt durch Ändern des Steigungswinkels $\Psi$ des Blatts einstellen, um den Angriffswinkel $\alpha$ des Blatts (16) als eine

Funktion der Winkel $\phi$ und $\Psi$ auszuwählen.

6. Querströmungswindturbine nach Anspruch 4, wobei der Steigungswinkel $\Psi$ des Blatts durch einen Drehgeber gemessen wird.

7. Querströmungswindturbine nach einem der vorangehenden Ansprüche, wobei die Steuermittel (22) an wenigstens einem der Rotorarme (10a) angebracht sind.

8. Querströmungswindturbine nach Anspruch 1, welche ferner eine an der Hinterkante des Blatts (16) schwenkbar angebrachte Klappe (16a) umfaßt und wobei das Blatt (16) zur Schwenkbewegung um eine vertikale Achse (12) gelagert ist und die Bestimmungsmittel (18) den Winkel $\phi$ der scheinbaren Fluidgeschwindigkeit V messen und wobei die Steuermittel (22) erste Steuermittel (22a) zum Einstellen des Steigungswinkels $\Psi$ des Blatts im wesentlichen auf den Winkel $\phi$ der scheinbaren Fluidgeschwindigkeit V sowie zweite Steuermittel (22b) zum Steuern des Klappenwinkels $\beta$ derart, daß der Klappenwinkel $\beta$ als eine Funktion des Winkels $\phi$ der scheinbaren Fluidgeschwindigkeit eingestellt wird, umfassen.

9. Querströmungswindturbine nach Anspruch 1, welche ferner eine an der Hinterkante des Blatts (16) schwenkbar angebrachte Klappe (16a) umfaßt und wobei das Blatt (16) zur Schwenkbewegung um eine vertikale Achse (12) gelagert ist und die Bestimmungsmittel (18) den Winkel $\phi$ der scheinbaren Fluidgeschwindigkeit V messen und wobei die Steuermittel (22) erste Steuermittel (22a) zum Einstellen des Steigungswinkels $\Psi$ des Blatts im wesentlichen auf den Winkel $\phi$ der scheinbaren Fluidgeschwindigkeit V sowie zweite Steuermittel (22b) zum Steuern des Klappenwinkels $\beta$ derart, daß der Klappenwinkel $\beta$ als eine Funktion des Steigungswinkels $\Psi$ des Blatts eingestellt wird, umfassen.

10. Querströmungswindturbine nach Anspruch 9, wobei die Steuermittel (22) den Angriffswinkel $\alpha$ des Blatts (16) als eine Funktion des Steigungswinkels $\Psi$ des Blatts und der gewünschten Ausgangsleistung der Turbine einstellen.

11. Querströmungswindturbine nach Anspruch 8, wobei die Klappe (16a) im wesentlichen benachbart zur Hinterkante des Blatts (16) angebracht ist.

12. Querströmungswindturbine nach Anspruch 1, wobei das Blatt (16) zur Schwenkbewegung um eine vertikale Achse (12) gelagert ist und ferner eine an der Hinterkante des Blatts (16) schwenkbar angebrachte Klappe (16a) umfaßt, wobei die Bestimmungsmittel (18) den Winkel $\phi$ der scheinbaren Fluidgeschwindigkeit V messen, ein Stabilisator (24) an dem Blatt (16) befestigt ist, der Stabilisator (24) dazu ausgelegt ist, sicherzustellen, daß das Blatt (16) in einem Angriffswinkel $\alpha$ von im wesentlichen Null gehalten wird und die Steuermittel (22) dazu ausgelegt sind, den Klappenwinkel $\beta$ derart zu steuern, daß der Klappenwinkel $\beta$ als eine Funktion des Winkels $\phi$ und des Steigungswinkel $\Psi$ des Blatts eingestellt wird.

13. Querströmungswindturbine nach Anspruch 12, wobei der Klappenwinkel $\beta$ als Funktion des Winkels $\phi$ der scheinbaren Fluidgeschwindigkeit oder des Steigungswinkels $\Psi$ des Blatts und der gewünschten Ausgangsleistung der Turbine eingestellt wird.

14. Querströmungswindturbine nach Anspruch 12, wobei die Steuermittel (22) einen Eingang aufweisen, der gleich dem Steigungswinkel $\Psi$ des Blatts ist und die Steuermittel (22) den Winkel $\phi$ der scheinbaren Fluidgeschwindigkeit V gemäß der Näherung $\phi = \Psi$ bestimmen.

15. Querströmungswindturbine nach einem der Ansprüche 12 bis 14, wobei die Steuermittel (22b) zum Steuern des Klappenwinkels $\beta$ in dem Blatt (16) angebracht sind.

16. Querströmungswindturbine nach einem der Ansprüche 12 bis 15, wobei das Auftriebszentrum der Kombination aus dem Blatt (16) und der Klappe (16a) vor dem Punkt (B) angeordnet ist, an dem das Blatt (16) zum Schwenken gelagert ist.

17. Querströmungswindturbine nach einem der Ansprüche 12 bis 16, ferner umfassend Mittel zum Erfassen der Winkelbeschleunigung des Blatts (16).

18. Querströmungswindturbine nach Anspruch 17, wobei die Steuermittel (22) dazu ausgelegt sind, ein Drehmoment auf das Blatt (16) auszuüben, welches proportional zur erfaßten Winkelbeschleunigung ist, um die Wirkungen der Trägheit des Blatts (16) zu kompensieren.

19. Querströmungswindturbine nach Anspruch 1, wobei das Blatt (16) zur Schwenkbewegung um eine vertikale Achse (12) gelagert ist und wobei die Bestimmungsmittel (18) den Winkel $\phi$ der scheinbaren Fluidgeschwindigkeit V messen und wobei die Querströmungswindturbine ferner wenigstens einen an dem Blatt (16) angebrachten Flügelstabilisator (24), welcher wenigstens eine bewegbare Steuerfläche aufweist, sowie Steuermittel (22B) umfaßt, welche auf den Winkel $\phi$ ansprechen, um den Schränkungswinkel $\tau$ der bewegbaren Steuerfläche als eine Funktion von $\phi$ zu ändern, wobei die Bewegung der Steuerfläche zu einer Änderung im Angriffswinkel $\alpha$ des Blatts (16) führt.

20. Querströmungswindturbine nach Anspruch 19, wobei das Steuermittel (22b) den Schränkungswinkel $\tau$ als eine Funktion von $\phi$ und der gewünschten Ausgangsleistung der Turbine einstellt.

21. Querströmungswindturbine nach einem der Ansprüche 19 und 20, wobei der Stabilisator (24) einen festen Stabilisator umfaßt und wobei die Steuerfläche eine bewegliche Auftriebsteuerfläche umfaßt.

22. Querströmungswindturbine nach einem der Ansprüche 19 bis 21, wobei das aerodynamische Zentrum der Kombination aus dem Blatt (16) und dem Stabilisator (24) hinter dem Schwenkpunkt (B) des Blatts (16) angeordnet ist.

23. Querströmungswindturbine nach einem der Ansprüche 19 bis 22, wobei der Stabilisator (24) durch Nockenmittel, Hydraulikmittel oder elektrische Mittel angetrieben ist, um den Schränkungswinkel $\tau$ der Steuerfläche zu ändern.

24. Querströmungswindturbine nach Anspruch 19, wobei jede Blattanordnung (16) an wenigstens einem sich relativ zur Rotorachse radial erstreckenden Rotorarm (10a, 10b) schwenkbar angebracht ist.

25. Querströmungswindturbine nach Anspruch 1, wobei jede Blattanordnung (16) an wenigstens einem sich relativ zur Rotorachse radial erstreckenden Rotorarm (10a, 10b) fest angebracht ist und ferner eine an der Hinterkante des Blatts (16) schwenkbar angebrachte Klappe (16a) umfaßt, wobei die Bestimmungsmittel (18) entweder den Winkel $\phi$ der scheinbaren Fluidgeschwindigkeit V relativ zur Tangente der Blattbahn oder zum Angriffswinkel $\alpha$ messen und die Steuermittel (22b) den Klappenwinkel $\beta$ als eine Funktion des durch die Bestimmungsmittel (18) gemessenen Winkels einstellen.

26. Querströmungswindturbine nach Anspruch 25, wobei die Steuermittel (22b) den Klappenwinkel $\beta$ als eine Funktion des durch die Bestimmungsmittel (18) gemessenen Winkels und der gewünschten Ausgangsleistung der Turbine einstellen.

**27.** Querströmungswindturbine nach Anspruch 25, wobei die Flächensehne des Blatts (16) tangential zu seiner Bahn um den Rotor ist.

**28.** Querströmungswindturbine nach einem der Ansprüche 1, 8, 19 oder 25, wobei die Mittel zum Bestimmen (18) des Winkels φ der scheinbaren Fluidgeschwindigkeit V eine zur Schwenkbewegung um eine vertikale Achse (12) dem Blatt (16) benachbart gelagerte Schwenk-Windfahne (18) oder einen Gierungsfühler mit 2 oder 3 Löchern umfaßt.

**29.** Querströmungswindturbine nach Anspruch 28, wobei die Windfahne (18) auf einer vor der Vorderkante des Blatts (16) angeordneten vertikalen Achse (12) gelagert ist.

**30.** Querströmungswindturbine nach Anspruch 28, wobei die Windfahne (18) koaxial zu dem Blatt (16) gelagert ist.

**31.** Querströmungswindturbine nach einem der Ansprüche 1, 8, 19 oder 25, wobei die Mittel zum Bestimmen (18) des Winkels φ der scheinbaren Fluidgeschwindigkeit ein an dem Blatt (16) angebrachtes Druckmeßmittel sowie Analysemittel zum Bestimmen des Angriffswinkels α des Blatts (16) aus den von der Druckmeßvorrichtung erhaltenen Druckmessungen umfassen.

**32.** Querströmungswindturbine nach Anspruch 31, wobei das Druckmeßmittel den Druck an wenigstens drei Punkten auf der Blattoberfläche mißt.

**33.** Querströmungswindturbine nach einem der Ansprüche 25 bis 32, wobei die Steuermittel (22b) ein Servosystem umfassen.

**34.** Querströmungswindturbine nach Anspruch 33, wobei das Stellglied des Servosystems in dem Blatt (16) angebracht ist.

**35.** Querströmungswindturbine nach einem der Ansprüche 25 bis 34, wobei der Auftriebskoeffizient des Blatts (16) unabhängig von dem Angriffswinkel α im wesentlichen konstant ist.

**Revendications**

**1.** Turbine éolienne à flux transversal comprenant un rotor monté de façon à tourner autour d'un axe vertical (12) ; une pluralité d'ensembles de pale reliés au rotor, chaque ensemble de pale comprenant une pale (16) de section transversale de l'aile; des moyens (18) pour déterminer la direction de la vélocité apparente du fluide ; et des moyens de commande (22) pour régler la pale caractérisée en ce que les moyens (18) pour déterminer la vélocité apparente du fluide sont montés sur le rotor et déterminent l'angle Φ de la vélocité apparente V du fluide par rapport à la tangente à l'orbite de la pale ; et en ce que les moyens de commande (22) sont sensibles aux moyens de détermination (18) pour régler la pale (16) de façon à ce que la composante de sustentation de la force aérodynamique s'exerçant sur la pale (16) contribue positivement au couple d'entraînement du rotor.

**2.** Turbine éolienne à flux transversal selon la revendication 1, dans laquelle la pale (16) est montée de façon à pivoter autour d'un axe vertical (12), dans laquelle le moyen de détermination (18) mesure l'angle Φ de la vélocité apparente V du fluide, et dans laquelle le moyen de commande (22) règle la pale en modifiant l'angle d'inclinaison longitudinale Ψ de la pale pour sélectionner l'angle d'attaque α de la pale (16) en fonction de l'angle Φ.

**3.** Turbine éolienne à flux transversal selon la revendication 2, dans laquelle le moyen de commande (22) règle l'angle d'attaque α de la pale (16) en fonction de l'angle Φ et de la puissance de sortie désirée de la turbine.

**4.** Turbine éolienne à flux transversal selon la revendication 1, dans laquelle on trouve indirectement l'angle Φ en mesurant l'angle d'inclinaison longitudinale Ψ de la pale et en utilisant la relation Φ = α + Ψ, dans laquelle α est l'angle d'attaque de la pale (16).

**5.** Turbine éolienne à flux transversal selon la revendication 1, dans laquelle la pale (16) est montée de façon à pivoter autour d'un axe vertical (12) et dans laquelle le moyen de détermination (18) mesure l'angle Φ et l'angle d'inclinaison longitudinale Ψ de la pale et le moyen de commande (22) règle la pale en modifiant l'angle d'inclinaison longitudinale Ψ de la pale pour sélectionner l'angle d'attaque α de la pale (16) en fonction des angles Φ et Ψ.

**6.** Turbine éolienne à flux transversal selon la revendication 4, dans laquelle l'angle d'inclinaison longitudinale Ψ de la pale est mesuré par un encodeur.

**7.** Turbine éolienne selon l'une quelconque des revendications précédentes dans laquelle le moyen de commande (22) est monté sur au moins un des bras du rotor (10a).

8. Turbine éolienne à flux transversal selon la revendication 1 comprenant en outre un volet (16a) monté de façon pivotante sur le bord de fuite de la pale (16) et dans laquelle la pale (16) est montée de façon à pivoter autour d'un axe vertical (12) et le moyen de détermination (18) mesure l'angle $\Phi$ de la vélocité apparente V du fluide et dans laquelle le moyen de commande (22) comprend un premier moyen de commande (22a) permettant de régler l'angle d'inclinaison longitudinale $\Psi$ de la pale à une valeur qui est sensiblement celle de l'angle $\Phi$ de la vélocité apparente V du fluide et un second moyen de commande (22b) permettant de commander l'angle de volet $\beta$ de façon à ce que l'angle de volet $\beta$ soit fonction de l'angle $\Phi$ de la vélocité apparente du fluide.

9. Turbine éolienne à flux transversal selon la revendication 1 comprenant en outre un volet (16a) monté de façon pivotante sur le bord de fuite de la pale (16) et dans laquelle la pale (16) est montée de façon à pivoter autour d'un axe vertical (12) et le moyen de détermination (18) mesure l'angle $\Phi$ de la vélocité apparente V du fluide et dans laquelle le moyen de commande (22) comprend un premier moyen de commande (22a) permettant de régler l'angle d'inclinaison longitudinale $\Psi$ de la pale à une valeur qui est sensiblement celle de l'angle $\Phi$ de la vélocité apparente V du fluide et un second moyen de commande (22b) permettant de commander l'angle de volet $\beta$ de façon à ce que l'angle de volet $\beta$ soit fonction de l'angle d'inclinaison $\Psi$ de la pale.

10. Turbine éolienne à flux transversal selon la revendication 9 dans laquelle le moyen de commande (22) règle l'angle d'attaque $\alpha$ de la pale (16) en fonction de l'angle d'inclinaison longitudinale $\Psi$ de la pale et de la puissance de sortie désirée de la turbine.

11. Turbine éolienne à flux transversal selon la revendication 8 dans laquelle le volet (16a) est monté de façon sensiblement adjacente au bord de fuite de la pale (16).

12. Turbine éolienne à flux transversal selon la revendication 1 dans laquelle la pale (16) est montée de façon à pivoter autour d'un axe vertical (12) et comprenant en outre un volet (16a) monté de façon pivotante sur le bord de fuite de la pale (16), dans laquelle le moyen de détermination (18) mesure l'angle $\Phi$ de la vélocité apparente V du fluide, un stabilisateur (24) étant fixé à la pale (16), ledit stabilisateur (24) étant disposé pour assurer que la pale (16) est maintenue à un angle d'attaque $\alpha$ sensiblement égal à zéro et un moyen de commande (22) permettant de commander l'angle de volet $\beta$ de façon à ce que l'angle de volet $\beta$ soit fonction de l'angle $\Phi$ ou de l'angle d'inclinaison longitudinale $\Psi$ de la pale.

13. Turbine éolienne à flux transversal selon la revendication 12 dans laquelle l'angle de volet $\beta$ est fonction de l'angle $\Phi$ de la vélocité apparente du fluide ou de l'angle d'inclinaison longitudinale $\Psi$ de la pale et de la puissance de sortie désirée de la turbine.

14. Turbine éolienne à flux transversal selon la revendication 12 dans laquelle ledit moyen de commande (22) a une entrée égale à l'angle d'inclinaison longitudinale $\Psi$ de la pale et ledit moyen de commande (22) détermine l'angle $\Phi$ de la vélocité apparente V du fluide selon l'approximation $\Phi = \Psi$.

15. Turbine éolienne à flux transversal selon l'une quelconque des revendications 12 à 14 dans laquelle le moyen de commande (22b) permettant de commander l'angle de volet $\beta$ est monté à l'intérieur de la pale (16).

16. Turbine éolienne à flux transversal selon l'une quelconque des revendications 12 à 15 dans laquelle le centre de sustentation de la pale (16) et du volet (16a) combinés est positionné en avant du point (B) sur lequel la pale (16) est disposée pour pivoter.

17. Turbine éolienne à flux transversal selon l'une quelconque des revendications 12 à 16 comprenant en outre un moyen permettant de détecter l'accélération angulaire de la pale (16).

18. Turbine éolienne à flux transversal selon la revendication 17 dans laquelle le moyen de commande (22) est disposé de façon à appliquer un couple sur la pale (16) qui est proportionnel à l'accélération angulaire détectée pour compenser les effets de l'inertie de la pale (16).

19. Turbine éolienne à flux transversal selon la revendication 1, dans laquelle la pale (16) est montée de façon à pivoter autour d'un axe vertical (12) et dans laquelle le moyen de détermination (18) mesure l'angle $\Phi$ de la vélocité apparente V du fluide et comprenant en outre au moins un stabilisateur à plan de sustentation (24) fixé à la pale (16) qui a au moins une surface de commande mobile et un moyen de commande (22b) qui est sensible à l'angle $\Phi$ pour modifier l'angle de décalage $\tau$ de la surface de commande mobile en fonction de $\Phi$, le mouvement de la surface de commande résultant d'une modification de l'angle d'attaque $\alpha$ de la pale (16).

**20.** Turbine éolienne à flux transversal selon la revendication 19 dans laquelle le moyen de commande (22b) règle l'angle de décalage $\tau$ en fonction de $\Phi$ et de la puissance de sortie désirée de la turbine.

**21.** Turbine éolienne à flux transversal selon l'une quelconque des revendications 19 et 20 dans laquelle le stabilisateur (24) comprend un stabilisateur fixe et dans laquelle la surface de commande comprend une surface de commande à élévateur mobile.

**22.** Turbine éolienne à flux transversal selon l'une quelconque des revendications 19 à 21 dans laquelle le centre aérodynamique de la pale (16) et du stabilisateur (24) combinés est positionné derrière le point pivot (B) de la pale (16).

**23.** Turbine éolienne à flux transversal selon l'une quelconque des revendications 19 à 22 dans laquelle le stabilisateur (24) est entraîné par des moyens de came, des moyens hydrauliques ou des moyens électriques pour modifier l'angle de décalage $\tau$ de la surface de commande.

**24.** Turbine éolienne à flux transversal selon la revendication 19 dans laquelle chaque ensemble de pale (16) est monté de façon pivotante sur au moins un bras de rotor (10a, 10b) qui s'étend radialement par rapport à l'axe du rotor.

**25.** Turbine éolienne à flux transversal selon la revendication 1 dans laquelle chaque ensemble de pale (16) est monté de façon fixe sur au moins un bras de rotor (10a, 10b) qui s'étend radialement par rapport à l'axe du rotor et qui comprend en outre un volet (16a) monté de façon pivotante sur le bord de fuite de la pale (16), dans laquelle le moyen de détermination (18) mesure l'angle $\Phi$ de la vélocité apparente V du fluide par rapport à la tangente à l'orbite de la pale ou l'angle d'attaque $\alpha$, et le moyen de commande (22b) règle l'angle de volet $\beta$ en fonction de l'angle mesuré par le moyen de détermination (18).

**26.** Turbine éolienne à flux transversal selon la revendication 25 dans laquelle le moyen de commande (22b) règle l'angle de volet $\beta$ en fonction de l'angle mesuré par le moyen de détermination (18) et de la puissance de sortie désirée de la turbine.

**27.** Turbine éolienne à flux transversal selon la revendication 25 dans laquelle le profil de la pale (16) est tangent à son orbite autour du rotor.

**28.** Turbine éolienne à flux transversal selon l'une quelconque des revendications 1, 8, 19 ou 25 dans laquelle le moyen de détermination (18) de l'angle $\Phi$ de la vélocité apparente V du fluide comprend une aube pivotante (18) montée de façon à pivoter autour d'un axe vertical (12) adjacent à la pale (16) ou une sonde indicatrice de lacet à deux ou trois trous.

**29.** Turbine éolienne à flux transversal selon la revendication 28 dans laquelle l'aube (18) est montée sur un axe vertical (12) positionné en avant du bord d'attaque de la pale (16).

**30.** Turbine éolienne à flux transversal selon la revendication 28 dans laquelle l'aube (18) est montée de façon coaxiale par rapport à la pale (16).

**31.** Turbine éolienne à flux transversal selon l'une quelconque des revendications 1, 8, 19 ou 25 dans laquelle le moyen de détermination (18) de l'angle $\Phi$ de la vélocité apparente du fluide comprend un moyen de mesure de pression monté sur la pale (16) et un moyen d'analyse permettant de déterminer l'angle d'attaque $\alpha$ de la pale (16) à partir des mesures de pression obtenues par le dispositif de mesure de pression.

**32.** Turbine éolienne à flux transversal selon la revendication 31 dans laquelle le moyen de mesure de pression mesure la pression en au moins trois points de la surface de la pale.

**33.** Turbine éolienne à flux transversal selon l'une quelconque des revendications 25 à 32 dans laquelle le moyen de commande (22b) comprend un servo-système.

**34.** Turbine éolienne à flux transversal selon la revendication 33 dans laquelle l'actionneur du servo-système est monté dans la pale (16).

**35.** Turbine éolienne à flux transversal selon l'une quelconque des revendications 25 à 34 dans laquelle le coefficient de sustentation de la pale (16) est sensiblement constant quelque soit l'angle d'attaque $\alpha$.

FIG 1

FIG 2

FIG 3A

FIG 3B

FIG 4

FIG 5

FIG 6

FIG 7A

FIG 7B

FIG 7C

FIG 8

FIG 9

FIG 10

FIG 11

FIG 12

FIG 13

Tip-speed Ratio. — 4.50 , -- 6.00 , + 7.50

FIG 14